# EUROPEAN PATENT APPLICATION

(11) **EP 4 656 619 A1**
(43) Date of publication of application: **03.12.2025**
(21) Application number: 25179748.6
(22) Date of filing: 29.05.2025
(51) Int. Cl.: C04B 35/80, C04B 35/565, C04B 35/573, C04B 35/628, C04B 35/653, C04B 41/00, C04B 41/52, C04B 41/89, F01D 5/28, C04B 41/45, C04B 111/00, C04B 111/28

(54) **DAMAGE RESISTANT CERAMIC MATRIX COMPOSITES**

(30) Priority: 30.05.2024 US 202418678693
(71) Applicant: RTX Corporation, Farmington, CT 06032 (US)
(72) Inventor: HOLOWCZAK, John E., South Windsor, 06074 (US); COLBY, Mary, West Hartford, 06117 (US)
(74) Representative: Dehns

(57) **Abstract**

A method of reducing the local fiber volume fraction and improving the fiber/filament distribution within ceramic fiber tows located within the outer layers (20) of a ceramic matrix composite (CMC) (10) comprising depositing a coating medium containing intumescent material(s), such as in the form of a slurry containing intumescent particles, onto and into the outer layer of a ceramic matrix composite preform to alter the fiber structure of the surface of a ceramic matrix composite (10). The CMC (10) loaded with intumescent material is heated to a temperature where the intumescent material expands, separating the filaments near the outside of the CMC (10) and reducing local elastic modulus. After expansion, the ceramic matrix composite (10) is subjected to densification and then, optionally, coated with an environmental barrier coating (EBC).

## Description

### FIELD OF THE INVENTION

The disclosure relates to methods for producing ceramic matrix composites ("CMCs"), and CMCs with improved foreign object damage (FOD) resistance. CMCs are advantageous in many applications, including but not limited to applications within gas turbine engines.

### BACKGROUND OF THE INVENTION

In comparison to monolithic ceramics, CMCs can offer improved foreign object damage (FOD) tolerance. However, such tolerance can be still below levels seen in superalloys. This hampers use of CMC materials, especially in rotating components such as turbine blades. One method by which current CMCs provide damage tolerance is via fiber toughening. Long fiber CMCs can be provided with interface materials such as carbon or boron nitride that will allow the fiber to slip relative to the matrix during an overstress condition such as during foreign object damage. However, there still exists a need to improve the FOD resistance of CMC components.

CMC components can be provided with coatings to provide protection to the underlying CMC against harsh environmental conditions, such as exposure to corrosive high temperature water vapor, or excessive temperatures. These protective coatings are known as environmental barrier coatings (EBCs).

To enhance FOD resistance, it is advantageous for CMC coatings such as EBCs to exhibit a good adhesion to the underlying CMC. However, mismatches in physical properties, such as thermal expansion and elastic modulus, between the CMC and coating(s) can lead to stress formation and adhesion problems as a result thereof. For example, many EBCs that provide good environmental resistance are higher in thermal expansion than the matrix/fiber composite of the CMC, yet lower in elastic modulus. These mismatches result in tension in the coating when the components are cooled below EBC deposition temperature. This tensile stress can lead to coating cracking and/or spallation.

The adherence of EBCs to CMCs has been shown to be enhanced by grading modulus and thermal expansion properties within the coating. However, there still exists a need to improve the adherence between CMCs and their coatings such as by providing further techniques for grading the physical properties of the coatings.

### SUMMARY OF THE INVENTION

The present disclosure is directed, in a first aspect, to a method of reducing local fiber volume fraction and improving filament distribution within a ceramic fiber tow located within an outer layer (or layers) of a ceramic matrix composite (CMC). The method includes:
a) applying a coating medium comprising intumescent material onto the outer layer (or layers) of a ceramic matrix composite preform to form a coated ceramic matrix composite preform,
b) heating the coated ceramic matrix composite preform to expand the intumescent material, and
c) densifying the coated ceramic matrix preform to form a densified ceramic matrix composite containing expanded intumescent material.

In yet another aspect, the present disclosure is directed to a ceramic matrix composite containing:
a plurality of fiber tows, each containing a plurality of fibers/filaments, in an outer layer of the ceramic matrix composite (CMC),
expanded intumescent material located in voids between at least a portion of the plurality of fiber tows of the outer layer, or between individual filaments of fiber tow(s) in the outer layer,
a matrix (such as a carbon or silicon carbide matrix) surrounding the fiber tows, and optionally an environmental barrier coating system on the outer layer of the ceramic matrix composite.

**In** yet another aspect, the present disclosure is directed to a fiber tow, i.e., a bundle of fibers or filaments, or a woven fabric containing one or more of such fiber tows, wherein voids are present between filaments of the fiber tow, and further containing, within the voids, intumescent material that has been heated to a temperature at which the intumescent material expands, wherein the expanded intumescent material separate filaments of the fiber tow.

**In** further examples of the present disclosure, including further of the above, the intumescent materials can be selected from ceramic yielding minerals, intumescent mineral particles, intumescent polymers, and combinations thereof.

**In** further examples of the present disclosure, including further examples of the above, the intumescent materials can be selected from alkali aluminosilicates, vermiculite, mica, perlite, expanded graphite, montmorillonite, polymers, and combinations thereof.

In further examples of the present disclosure, including further examples of the above, the intumescent material can be selected from particles of vermiculite, sol-gel vermiculite, low iron vermiculite (< 5,000 ppm iron), substantially iron free (< 100 ppm iron) vermiculite, mica, perlite, expanded graphite, montmorillonite, and combinations thereof.

In further examples of the present disclosure, including further examples of the above, the intumescent material can be selected from polymeric intumescent materials.

In further examples of the present disclosure, including further examples of the above, the polymeric intumescent materials can be selected from polypropylenes, polyamides, thermoplastic polyurethanes, and combinations thereof.

In further examples of the present disclosure, including further examples of the above, the fibers/filaments of the fiber tows can contain silicon carbide (SiC), carbon, mullite 3Al₂O₃·2SiO, mullite 2Al₂O₃·SiO₂, silicon nitride, aluminum oxide, or combinations thereof.

In further examples of the present disclosure, including further examples of the above, the coating medium comprising intumescent material can be deposited on the CMC preform by spraying, immersion, printing, or painting.

In further examples of the present disclosure, including further examples of the above, the coating medium contains intumescent particles and has a particulate load of 2 to 40 vol.%.

In further examples of the present disclosure, including further examples of the above, the coating medium is an aqueous slurry, a non-aqueous slurry, a dissolved polymer, or a liquid polymer.

In further examples of the present disclosure, including further examples of the above, the intumescent particles can have a size between about 0.5 to 110 microns, for example, 0.5 to 100 microns, 60 to 110 microns, or 1 to 10 microns.

In further examples of the present disclosure, including further examples of the above, the coated CMC can be densified via chemical vapor infiltration (CVI), polymer infiltration and pyrolysis (PIP), or by infiltration of silicon or silicon alloys.

In further examples of the present disclosure, including further examples of the above, the intumescent material can be heated to a transformation temperature of between about 600 to 1000 °C to form the expanded intumescent material.

In further examples of the present disclosure, including further examples of the above, an environmental barrier coating is applied to the densified coated CMC.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIGs. 1A-1C schematically illustrate the effect of an FOD impacted by a foreign object on a CMC.
FIGs. 2A-2B are schematic cross-sectional views through a fiber tow bundle with intumescent particles located in the fiber voids of the outer portions of the fiber bundle.

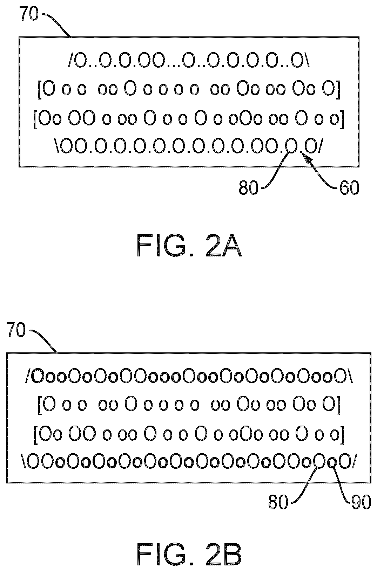

FIG. 2A shows the intumescent particles within the fiber tow voids before expansion and FIG. 2B shows the intumescent particles within the fiber tow voids after expansion.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

As noted above, the present disclosure is directed to CMC components such as those used in gas turbine engines. In particular, in accordance with the present disclosure, the CMC components exhibit a with reduced local fiber volume fraction and improved matrix distribution within ceramic fiber tows located within outer layers of the CMC.

CMCs are made from ceramic preforms that are shaped structures made from ceramic fibers or fiber tows. These preforms serve as the initial framework for creating CMCs. Preforms can be in the form of sheets, blankets, or intricate 3D shapes. They determine the final architecture and geometry of the composite. Within a CMC preform, the fibers or fiber tow bundles may be twisted or untwisted, and may be arranged in woven, non-woven, braided, knitted or other known fiber architectures. The CMC preform may further include a matrix within which the fibers reside.

The fiber tows may be woven into plies, and a collection of the plies may then be shaped into a preform of the CMC component. Within the preform, voids will exist between the fibers/filaments of individual tows (intra-tow voids or inter-filament voids) as well voids between individual tows in the CMC preform (inter-tow voids). For example, the tows (e.g., SiC fiber tows) may only fill a portion of the preform (e.g., about 30-60 % of the preform volume), thereby leaving a remainder of the preform (e.g., about 40-70 %) as void space within the perimeter of the preform.

The voids between the fibers in a tow bundle will vary depending on the fiber diameter and how the fibers are arranged. The typical diameter of each individual filament in a fiber tow ranges from 10 to 15 micrometers (µm), which is equivalent to approximately 0.40 to 0.59 mils. The voids within a fiber tow are often small due to the fine diameter of the individual filaments.

As the fibers of the tows used in CMCs (e.g., silicon carbide, silicon nitride, and carbon fibers or filaments) have higher elastic modulus than most ceramic matrices, the spreading of the fibers within the tows serves to reduce the local fiber volume fraction, and thence the elastic modulus of fabric layers formed from such tows. Those skilled in the art will recognize that lowering elastic modulus can serve to reduce the materials stress response to impact, or serve to provide a graded modulus to CMC.

Spreading of the fibers within the tows can be achieved by applying a coating medium containing intumescent medium onto and into the outer layer(s) of a CMC preform to form an intumescent coated/infiltrated CMC preform. The intumescent material can then be expanded by heating the coated CMC preform to intumescent transformation temperatures, whereby the intumescent material expands pushing apart individual fibers/filaments within a tow and pushing apart adjacent tows. The inter-filament voids and/or inter-tow voids are thus filled with lower density materials with decreased elastic modulus. The expansion of the intumescent material reduces the local volume fraction of fibers and in turn improves impact resistance by decreasing the local elastic modulus of the layer(s) and enhancing the independent action of individual filaments (shown to increase both strength and work of fracture). This expansion reduces the elastic modulus of the outer layers, which can improve Foreign Object Damage (FOD) resistance.

As used herein, FOD in composite materials refers to any damage caused by the intrusion of foreign objects into the composite structure. These foreign objects could be particles, debris, or other materials that are not part of the original composite structure.

FOD can occur during use, as well as during manufacturing, transportation, assembly, or service of composite components. It can manifest in various forms, such as scratches, dents, punctures, or delaminations. In composite materials, FOD can be particularly concerning because such damage can compromise the structural integrity and thus the performance of the CMC component. Even small defects or damage can lead to stress concentrations, which may propagate over time, resulting in structural failure.

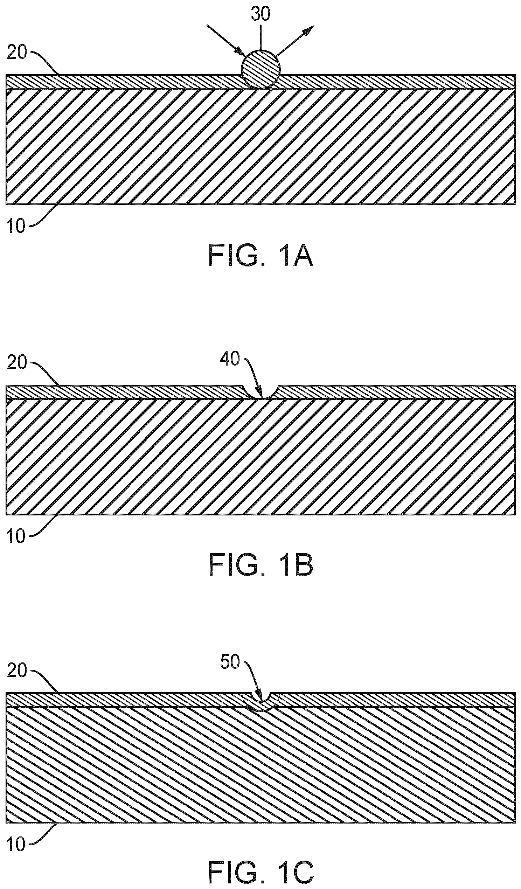

FIGS. 1A-1C schematically illustrate the protective effect that embedded intumescent material can have on a CMC component. FIG. 1A shows a CMC composite 10 with outer layer(s) 20 being impacted by a foreign object 30. As can be seen in FIG. 1B, the impact of foreign object 30 results in damage 40 to the outer layer(s) 20 of the CMC. Such damage exposes the interior of the CMC (i.e., the region below outer layer(s) 20) thereby facilitating penetration of, for example, high temperature water vapor which can deteriorate the CMC. However, as shown in FIG. 1C, when intumescent materials are embedded into the outer layer(s) 20, foreign object damage 50 is minimized due to the expanded intumescent material which significantly reduces local elastic modulus of the outer layer(s) 20, and which in turn reduces the stress response to an FOD impact.

In general, ceramic fibers used in CMCs are thin, elongated strands made from materials like, for example, silicon carbide (SiC), alumina (Al₂O₃), carbon, mullite (3Al₂O₃·2SiO or 2Al₂O₃·SiO₂.), silicon nitride, or other ceramics. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In some particular examples, the fibers are silicon carbide fibers. These are just a few examples of fibers used in ceramic matrix composites. Each type of fiber can offer unique properties and advantages, allowing for tailored performance in various high-performance applications. The choice of fiber type depends on the specific requirements of the application, including temperature range, mechanical loads, and environmental conditions.

These fibers are typically continuous and have high-temperature stability, excellent mechanical properties, and resistance to chemical corrosion. Ceramic fiber tows refer to bundles of these fibers (or filaments), arranged in parallel. Tows serve as the fundamental building blocks for creating CMCs. The fibers may include discontinuous fibers, continuous fibers, or some combination thereof. Each fiber tow may comprise a substantial number of fibers/filaments. The specific number of fibers in a tow may vary depending on characteristics of the desired tow and/or characteristics of the CMC component being produced. As an example, a number of SiC fibers (e.g., 100, 200, 300, 400, 500, 1000) may be aligned parallel to create each tow. The fibers may be grouped into discrete bundles.

Fiber tow counts in a CMC fiber preform can also vary widely depending on the specific requirements of the application and the desired properties of the final component. For example, in a unidirectional preform, all fiber tows are oriented parallel to each other in one direction. The fiber tow count in such preforms can range from a few hundred to several thousand fiber tows per square inch or per centimeter, depending on the desired fiber volume fraction and mechanical properties. In woven or braided preforms, the fiber tow count can be even higher, as multiple layers of fiber tows are interlaced or intertwined to create a three-dimensional structure. The fiber tow count in these preforms can range from thousands to tens of thousands of tows.

As noted above, in the present disclosure, intumescent materials are inserted into the voids between the fibers in a tow bundle and/or into voids between individual tows in outer layer(s) of the preform. The fiber architecture of the CMC preform may be infiltrated with one or more intumescent materials disposed within a liquid containing the intumescent materials, i.e., a coating medium. For example, using an intumescent particle slurry, intumescent particles can be deposited into the voids between the fibers and in particular into the voids in the outer layers of a CMC preform. Expansion of the intumescent particles between the filaments and between the fiber tows improves the filament distribution within fiber tows.

FIGS. 2A and 2B are simplified schematic cross-sectional views through a fiber tow bundle 70 with intumescent particles 60 located in the fiber voids between filaments 80 of the outer portions of the fiber tow bundle. FIG. 2A shows the particles 60 within the fiber tow voids before expansion, and FIG. 2B shows the expanded intumescent particles 90 within the fiber tow voids after heat treatment and expansion. After heat treatment, but prior to intumescent particle transformation temperatures, the fiber tow bundle 70 becomes wider and taller as the expanded intumescent particles 90 cause the filaments 80 to spread thereby reducing the average elastic modulus of the outer layers of the fiber tow.

Intumescent materials resist combustion and expand when subjected to high temperatures. The intumescent materials can be, for example, ceramic yielding minerals or intumescent mineral particles such as particles of alkali aluminosilicates, vermiculite, mica, perlite, expanded graphite, montmorillonite, or combinations thereof. In some particular examples, the intumescent particles can be synthetic vermiculite or sol-gel vermiculite. In other particular examples, a low iron vermiculite or substantially iron free form of vermiculite can be used.

Synthetic forms of vermiculite prepared from a sol gel process and low sodium (< 5000 ppm)or sodium free (< 100 ppm) form of perlite may also be used. Other suitable intumescent particles include alumina silicate, quartz powder, hydrated lime, cement, silicate foam, gypsum foam, foam glass and intumescent glass (by the constructional materials that reclaims glass manufacture).

Regarding size, the intumescent particles may be, prior to expansion, for example, between about 0.5 to 110 microns, such as 0.5 to 100 microns. In further examples, the average intumescent particles size is between about 1 to 10 microns (e.g., 1-3 microns, 4-7 microns, 8 to 10 microns). The slurry used for deposition may contain, for example, about a 2 to 40 vol.% intumescent particulate load (e.g., 2-10 vol.%, 10-30 vol.%, 30 to 40% vol.).

Deposition of intumescent material can be carried out in various ways. The coating medium containing intumescent material (e.g. an intumescent particle slurry) can be deposited on the CMC preform by, for example, spraying, immersion, printing, or painting. In one embodiment, the CMC preform can be immersed in the coating medium. Immersion can include dunking the CMC preform in a vat of the coating medium. Alternative embodiments can include techniques such as spraying, painting, and printing of the coating medium onto CMC preform.

It can be desirable to target either the larger, inter-tow pores (spaces between tows in the CMC preform) or the smaller, intra-tow pores or inter-filament pores (spaces between fiber/filaments within the tows) for particle deposition. In either case, the particle mixture can contain a single or narrow particle size distribution commensurate with the targeted pore size. Deposition targeting both the inter-tow and intra-tow pores can be carried out using a single particle mixture containing multiple or a wide particle size distribution. Because of the disparity in size between inter-tow and intra-tow pores, larger particles will tend to occupy the inter-tow pores, while the smaller particles will tend to move through the smaller, inter-filament spaces within the near surface fiber tows porosity. In this way, particle size and size distribution can be selected for a specific CMC. For example, desirable particle sizes might include a range of 1 to 10 microns to target the smaller, intra-tow pores, and 60 to 110 microns to target the larger, inter-tow pores. In a particular embodiment, the smaller particles can be about 4-12 microns and the larger particles can be about 80-100 microns. It is further possible, if targeting deposition in both inter-tow and intra-tow pores, to apply distinct particle mixtures, each with a single or narrow particle size distribution commensurate with the inter and intra-tow pores, respectively. For example, a first mixture of particles ranging from 1 to 10 microns can be applied, followed by a second mixture of the larger particles ranging from 60 to 110 microns. The application of a single mixture may be more efficient with respect to time and cost. Thus, for example, the batches of particles ranging from 1 to 10 microns and the particles ranging from 60 to 110 microns can be provided in a single step, for example, by using a mixture of these two particle batches with different size distributions.

Intumescent particles expand significantly when heated, transforming from a compact state to a voluminous particle. In general, mineral based intumescent particle transformation temperatures are between about 600 to 1000 °C. After particle expansion, the coated/infiltrated ceramic matrix composite can be subjected to densification via matrix infiltration and then optionally coated with an EBC. The exact percentage of expansion varies based on the type of particle, specific conditions, and temperature ranges. Graphite, for example, can have a 10-fold increase in surface area.

For example, montmorillonite is a type of clay mineral belonging to the smectite group, which is a subclass of phyllosilicates. Above 400°C, the thermal expansion of montmorillonite becomes particularly significant. The interlayer structure of montmorillonite collapses at temperatures ranging from 500°C to 700°C and particles exhibit inhomogeneous thermal expansion. Thus, in embodiments in which the intumescent particles are montmorillonite, the expansion temperature range is between about 500°C to 700°C.

The thermal expansion of perlite begins when it reaches temperatures of approximately 850-900°C. During this process, the water trapped within the perlite structure vaporizes and escapes, leading to the expansion of the material. The resulting expanded perlite can increase its volume by 7-16 times compared to its original state.

On the other hand, the thermal expansion of vermiculite begins when it reaches temperatures of approximately 900°C. At such temperatures, vermiculite can expand up to 10 times or more compared to its original volume.

As noted above, various forms of vermiculite can be used as the intumescent material. Sol-gel vermiculite is prepared through a process that combines sol-gel chemistry with the unique properties of vermiculite. The sol gel process begins with raw vermiculite, which is a hydrous phyllosilicate mineral typically mined from natural deposits and consists of thin, flat flakes containing microscopic layers of water. The sol-gel method involves creating a sol, which is a colloidal suspension of solid particles in a liquid (usually water or alcohol). In the case of vermiculite, the sol-gel process aims to modify its structure and properties by introducing additional components. Briefly, the raw vermiculite is hydrated to ensure it contains the necessary water molecules within its structure. A precursor solution (the sol) is prepared by mixing the hydrated vermiculite with a suitable solvent. This solvent can be water or an organic liquid. The sol undergoes a gelation process, where the particles start to aggregate and form a three-dimensional network. The gel is carefully dried to remove the solvent. Upon heat treatment to a specific temperature, the trapped water molecules in the vermiculite structure evaporate. The vermiculite particles expand due to the rapid vaporization of water.

In some embodiments of the present invention the intumescent material is a synthetic vermiculate. Synthetic vermiculite can be prepared by such processes as wet and dry grinding of raw vermiculite to create submicron-sized particles. Mechanical shearing force can also be used to delaminate vermiculite layers, resulting in finer particles. Synthetic vermiculite can be prepared by subjecting raw materials to hydrothermal conditions (high temperature and pressure) in the presence of water. This process can lead to the formation of vermiculite-like structures with modified properties. Chemical treatments can alter the structure and properties of vermiculite. For example, ionic metal exchange or treatment with hydrogen peroxide can modify the interlayer spacing and enhance specific characteristics.

In some embodiments, expanded graphite can be used as the intumescent material. Expanded graphite, also known as graphite foam or expanded graphite intercalation compound, is derived from natural graphite flakes. The material is produced by intercalating (inserting) various chemicals (such as sulfuric acid, nitric acid, or potassium permanganate) between the layers of graphite. The intercalation process creates a sandwich-like structure where the layers of graphite are separated by the intercalating agent. When heated, the intercalating agent vaporizes, causing the graphite layers to expand. The resulting expanded graphite has a foamy, porous structure with excellent thermal and electrical conductivity. The exact expansion temperature for expanded graphite depends on the specific intercalating agent used and the processing conditions. Generally, expanded graphite undergoes significant expansion when heated to temperatures above 600°C. At these elevated temperatures, the intercalating agent decomposes, releasing gases and causing the graphite layers to separate and the material to further expand.

In other embodiments, the intumescent materials can be polymeric intumescent materials. For example, polymeric intumescent materials can be selected from polypropylenes, polyamides, thermoplastic polyurethanes, and combinations thereof. Polymeric intumescent materials can be coated onto the CMC preform as a solution of dissolved polymer, a suspension of solid polymer particles, or as a liquid polymer. For polymers, the transformation temperature is, for example, between about 200 to 600 °C

After the CMC preform is coated, the now intumescent loaded preform may be subjected to densification to fill the remaining void space and form the CMC. Densification involves reducing the porosity within the composite material, making it more solid and robust, by filing the remaining pores with a matrix material. The goal is to achieve a high relative density, ensuring that the final CMC structure is compact and free of large voids.

Various methods are used for densification, including hot pressing, spark plasma sintering (SPS), chemical vapor infiltration (CVI), chemical liquid-vapor deposition (CLVD), liquid silicon infiltration (LSI), and polymer infiltration and pyrolysis (PIP). Chemical vapor infiltration (CVI) involves introducing gaseous precursors into the porous CMC preform. These precursors react at the surface of the fibers, depositing additional material and filling the voids. Chemical liquid-vapor deposition (CLVD) uses liquid precursors that vaporize and infiltrate the preform. The liquid-to-vapor conversion occurs at the fiber surface, leading to densification. Liquid silicon infiltration (LSI) utilizes liquid silicon to infiltrate the CMC preform. Silicon reacts with carbon or other constituents of the CMC preform, forming a dense matrix.

In polymer infiltration and pyrolysis (PIP) a polymer precursor is infiltrated into the preform. The subsequent pyrolysis process converts the polymer into a ceramic matrix. During pyrolysis the matrix shrinks leading to microcracks, which require repeating the polymer and infiltration cycle multiple times.

Densification results in a vapor deposited a vapor deposited matrix (for example, a carbon or silicon carbide matrix) on and within the CMC preform containing the expanded intumescent particles. The densification of ceramic matrix composites (CMCs) typically occurs before the application of coatings such as EBC, which are discussed further below.

As noted above, CMC components can include protective coatings, such as environmental barrier coatings (EBCs), thereon, to provide protection to the underlying CMC against harsh environmental conditions (e.g., corrosive high temperature water vapor, or excessive temperatures). To provide FOD resistance, such coatings preferably exhibit strong adhesion to the underlying CMC.

However, mismatches in physical properties, such as thermal expansion and elastic modulus, between the CMC and coating(s) can lead to stress formation and adhesion problems as a result thereof. For example, large differences in the thermal expansion coefficient of the CMC substrate and EBC can result in spalling and reduced FOD resistance.

In accordance with the present disclosure, the impact of differences in the elastic modulus between the coating and the CMC can be graded to thereby reduce the effect of thermal expansion mismatch stresses. In particular, by inclusion of intumescent materials into the coating (e.g., EBC) at the interface between the coating and the CMC can reduce the elastic modulus of the coating thereby reducing the elastic modulus differential at the interface, i.e., reducing the property mismatch. The intumescent materials can be selected from the same materials mentioned above for use in coating the CMC preform and expanded is the same manner as described above.

EBCs can be formed as a multilayered coating system having, for example, a bond coat layer for enhancing adhesion to the CMC substrate, and a top coat layer exhibiting desired environmental protection characteristics. If a bond coat layer is present, it would be desirable to include the inclusion of intumescent materials into the bond coat as this will be the layer in contact with the CMC substrate.

EBC layers can be made from a variety of materials such as hafnium silicates, zirconium silicates, rare earth monosilicates (RE₂SiO₅) (e.g., yttrium silicate), rare earth disilicates (RE₂Si₂O₇), rare earth phosphates, aluminosilicates, or HfO₂-SiO₂-rare earth oxide, and combinations thereof, wherein RE is Sc, Y, La, Ce, Pr, Nd, Pm, Sm, Eu, Gd, Tb, Dy, Ho, Er, Tm, Yb, or Lu), for example, yttria-stabilized zirconia (YSZ), a rare earth silicate, a lanthanum silicate (La₂SiO₅), a ytterbium silicate (Yb₂SiO₅), mullite (3Al₂O₃·2SiO or 2Al₂O₃ SiO₂.), hafnium oxide (HfO₂) or hafnium silicate. Layers can be made from mixtures of materials such as a mixture of hafnon (HfSiO₄) and zircon (ZrSiO₄), or a mixture of rare earth monosilicate and rare earth disilicate.

The coating or the initial layer (e.g., a bond coat layer) of an EBC coating system (can be applied in the form of an aqueous slurry or other fluid slurry (e.g., mixture of coating material, solvent, optional intumescent particles, and optional sintering aids), which is prepared and deposited onto the CMC substrate. In accordance with the present disclosure, this slurry can further contain the intumescent materials. Application of material as a slurry allows relatively simple and uniform application of the EBC as desired.

Thus, in certain embodiments of the present disclosure, the EBC contains intumescent material and coats a CMC that does not contain intumescent material. In certain embodiments, the EBC contains intumescent material and coat a CMC that also contains intumescent material. In certain embodiments, the EBC does not contain intumescent material and coats a CMC that contains intumescent material.

EBCs can also be applied to CMC substrates using techniques such as chemical vapor deposition (CVD) or plasma spraying (e.g., atmospheric plasma spraying (APS), vacuum plasma spraying (VPS), low pressure plasma spraying (LPPS), shrouded plasma spraying, and suspension plasma spraying (SPS)). In plasma spraying, powdered EBC materials are heated and accelerated by a plasma jet, which then deposits them onto the CMC substrate. In CVD, a gas-phase reactant decomposes on the heated substrate surface, forming a solid coating. In certain embodiments the intumescent particles may also be applied to the CMC surface prior to CVD or plasma spraying. Thus, the intumescent particles are incorporated into the EBC coating during the CVD or plasma spraying application process.

In embodiments in which the intumescent material is applied in the EBC coating, the coating may contain 2 to 40 vol.% intumescent particulate load, for example, about 5 to 20 vol.% intumescent particulate load (e.g., 6 to 10 vol.%, 11 to 15 vol.%, 16-20%). When used within an EBC coating, intumescent particles can be from 1-100 microns (e.g., 5-20, 1-20, 21-40, 41-60, 61-80, or 81 to 100 microns). The intumescent particle laden EBC is heated to an intumescent expansion temperature of, for example, between about 600 to 1000 °C.

After coating, the EBC coated ceramic matrix composite is heated to an intumescent expansion temperature of, for example, between about 600 to 1000 degrees C. As noted above, the intumescent material can be the same as mentioned above for the coating of the CMC preform, for example, ceramic yielding minerals, or intumescent mineral particles, and intumescent polymers such as alkali aluminosilicates, vermiculite, mica, perlite, expanded graphite, montmorillonite, polymers, or combinations thereof.

Those skilled in the art will recognize that management of elastic modulus changes both at the surface of the CMC, and within the EBC coating, can work synergistically.

As used in this specification and the appended claims, the singular forms "a," "an," and "the" include plural forms thereof unless the context clearly indicates otherwise. Unless otherwise indicated, all numbers expressing conditions, concentrations, dimensions, and so forth used in the specification are to be understood as being modified in all instances by the term "about".

Where methods and steps described above indicate certain events occurring in certain order, those of ordinary skill in the art will recognize that the ordering of certain steps may be modified and that such modifications are in accordance with the variations of the invention. Additionally, certain steps may be performed concurrently in a parallel process when possible, as well as performed sequentially. Therefore, the particular order of the steps set forth in the description should not be construed as a limitation.

While various embodiments of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these features may be described individually, it is within the scope of the present disclosure that some or all of these features may be combined with any one of the aspects and remain within the scope of the present disclosure. Accordingly, the present disclosure is not to be restricted except in light of the attached claims and their equivalents.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A method of reducing local fiber volume fraction and improving filament distribution within a ceramic fiber tow (70) located within outer layer(s) (20) of a ceramic matrix composite (CMC) (10) comprising:
a) applying a coating medium comprising intumescent material onto an outer layer(s) of a ceramic matrix composite preform to form a coated ceramic matrix composite preform;
b) heating the coated ceramic matrix composite preform to expand the intumescent material; and
c) densifying the coated ceramic matrix composite preform to form a densified ceramic matrix composite containing expanded intumescent material.

2. The method of claim 1, wherein said intumescent materials are polymeric intumescents.

3. The method of claim 2, wherein said polymeric intumescents comprise polypropylene, polyamide, thermoplastic polyurethane, or combinations thereof.

4. The method of any preceding claim, wherein said coating medium is deposited on the ceramic matrix composite preform by spraying, immersion, printing, or painting.

5. The method of any preceding claim, wherein said coating medium is a slurry with a 2 to 40 vol.% particulate load.

6. The method of any preceding claim, wherein said coating medium is an aqueous slurry.

7. The method of any preceding claim, wherein said coated ceramic matrix composite preform is densified via chemical vapor infiltration, polymer infiltration and pyrolysis (PIP), or by infiltration of silicon or silicon alloys.

8. The method of any preceding claim, wherein the intumescent material is heated to a transformation temperature of 600 to 1000 °C.

9. The method of any preceding claim, further comprising applying an environmental barrier coating (20) to the densified ceramic matrix composite.

10. A ceramic matrix composite comprising:
a plurality of fiber tows (70), each containing a plurality of filaments (80), in an outer layer (20) of the ceramic matrix composite (10);
expanded intumescent material located in voids between at least a portion of the plurality
of fiber tows (70) of the outer layer (20), or between individual filaments (80) of fiber tow(s) (70) in the outer layer (20);
a matrix surrounding the fibers; and
optionally an environmental barrier coating layer on the outer layer of the ceramic matrix composite.

11. The method or ceramic matrix composite of any preceding claim, wherein the intumescent material is in the form of particles (60, 90) having a particle size of between 0.5 to 110 microns, optionally of between 1 to 10 microns.

12. The method or ceramic matrix composite of any preceding claim, wherein said intumescent material is ceramic yielding minerals, intumescent mineral particles, or combinations thereof.

13. The method or ceramic matrix composite of any of claims 1 to 11, wherein said intumescent material comprises alkali aluminosilicates, vermiculite, a sol-gel vermiculite, a low iron vermiculite, a substantially iron free vermiculite, mica, perlite, expanded graphite, montmorillonite, or combinations thereof.

14. The method or ceramic matrix composite of any preceding claim, wherein said ceramic fibers comprise silicon carbide (SiC), carbon, mullite 3Al₂O₃·2SiO, mullite 2Al₂O₃·SiO₂, silicon nitride, or aluminum oxide or a combination thereof.

15. A fiber tow comprising a bundle of filaments, wherein voids are present between the filaments of the fiber tow, and further comprising, within the voids, expanded intumescent material, wherein the expanded intumescent material separate filaments of the fiber tow.
